(19) Europäisches Patentamt
European Patent Office
Office européen des brevets

(11) Veröffentlichungsnummer: **0 009 823 A1**

# (12) EUROPÄISCHE PATENTANMELDUNG

(21) Anmeldenummer: 79103874.8

(22) Anmeldetag: 09.10.79

(51) Int. Cl.³: **G 01 B 3/10**

(30) Priorität: 09.10.78 DE 2844020

(43) Veröffentlichungstag der Anmeldung:
16.04.80 Patentblatt 80/8

(84) Benannte Vertragsstaaten:
FR GB SE

(71) Anmelder: **Stabila-Messgeräte Gustav Ullrich GmbH & Co.KG**
**Postfach 1340**
**D-6747 Annweiler am Trifels(DE)**

(72) Erfinder: **Leipold, Günther**
**Bahnhofstrasse 6**
**D-6747 Annweiler(DE)**

(74) Vertreter: **Eitle, Werner, Dipl.-Ing. et al,**
**Arabellastrasse 4**
**D-8000 München 81(DE)**

## (54) Rollbandmass.

(57) Bei einem Rollbandmaß ist das Maßband im Querschnitt gewölbt. Zwecks Erhöhung der Knick- bzw. Biegesteifigkeit des Maßbandes in dem Biegungssinne, in welchem das Maßband bisher eine relativ geringe Biege- bzw Knicksteifigkeit besessen hat, weist das Maßband (1) neben oder innerhalb der Querwölbung (3) mindestens eine entgegengesetzt gerichtete Gegenwölbung (4) auf. Zweckmäßig ist das Maßband (1) im Querschnitt wellenförmig mit zwei oder drei Wölbungen (3,4) gleicher oder unterschiedlicher Scheitelhöhen und Breiten gewölbt. Die Querwölbungen können ebene Querschnittsbereiche (11,12) aufweisen.

FIG.1

1
2

FIG.2

4
3 3

FIG.6

12
11 11

EP 0 009 823 A1

Croydon Printing Company Ltd.

Rollbandmaß

Die Erfindung bezieht sich auf ein Rollbandmaß mit einem im Querschnitt gewölbten Maßband, insbesondere ein solches aus federelastischem Material, z.B. Metall.

Derartige Rollbandmaße sind seit langem bekannt. Sie sind über die ganze Querschnittsbreite in einem Sinne kontinuierlich gewölbt, so daß sie auf einer Breitseite konkave, auf der anderen Breitseite konvexe Wölbungen besitzen. Hierdurch wird eine Versteifung des Maßbandes erreicht, wenn dieses zum Messen von der Trommel abgewickelt ist. Eine derartige Bandversteifung ist vor allem dann notwendig, wenn bei Horizontalmessung das Band frei und weitgehend ununterstützt gehalten werden soll oder wenn bei etwa vertikaler Messung das Band mit seinem von der Trommel abgewickelten Teil frei nach oben gehalten wird.

Die bekannten Rollbandmaße mit quergewölbtem Maßband besitzen jedoch den Nachteil, daß sie nur gegen Biegung in einem Biegesinne bzw. in eine Biegerichtung relativ steif sind, während sie gegen Biegung im anderen Biegesinne bzw. in anderer Richtung, in der das Band konkave Wölbung besitzt, nur geringe Biegesteifigkeit haben. Dies führt dazu, daß die Maßbänder bei den bekannten Rollbandmaßen beim freien Messen in die Höhe nach der einen Seite abknicken, so daß die Biegesteifigkeit, die nach der anderen Seite des Maßbandes gegeben ist, nichts oder wenig nützt. Bei etwa horizontaler, freiliegender, d.h. weitgehend ununterstützter Messung besteht ebenfalls eine hohe Knickgefahr, je nachdem, ob das Band im Hinblick auf seine Unterstützungsstellen bzw. Auflagerungsstellen mit der biegeweichen Seite nach oben oder nach unten gehalten wird.

Der Erfindung liegt die Aufgabe zugrunde, die Knick- bzw. Biegesteifigkeit von quergewölbten Maßbändern in dem Biegungssinne, in welchem sie bisher relativ geringe Biege- bzw. Knicksteifigkeit besessen haben, zu erhöhen. Dies wird erfindungsgemäß dadurch erreicht, daß das Maßband neben oder innerhalb der Querwölbung mindestens eine entgegengesetzt gerichtete (gewölbte) Gegenwölbung hat. Durch diese Gegenwölbung wird die Biegesteifigkeit des Maßbandes in dem Biegesinne, in dem das Maßband bei einer kontinuierlichen einsinnigen Wölbung bisher nur geringe Biege- und Knicksteifigkeit hatte, erheblich erhöht.

Bei einer zweckmäßigen Ausführungsform besitzt das erfindungsgemäße Rollbandmaß im Bandquerschnitt die Form einer oder mehrerer aneinanderliegender flacher Wellen. Die im einen Sinne orientierten Wölbungen können andere Scheitelhöhe, andere Breite und steiler oder flacher sein als die im anderen Sinne orientierten Gegenwölbungen. Bei drei im Querschnitt nebeneinanderliegenden Wölbungen kann es zweckmäßig sein, die beiden äußeren Wölbungen im gleichen Sinne zu wölben und die dazwischen befindliche Wölbung als Gegenwölbung auszubilden.

Diese Gegenwölbung kann größere oder kleinere Scheitelhöhen haben als die beiden Randwölbungen. Es kann auch zweckmäßig sein, wenn die Gegenwölbung im Querschnitt sickenähnliche Form hat.

In der Zeichnung sind besonders zweckmäßige Ausführungsbeispiele der Erfindung in Querschnitten durch das Maßband dargestellt, die im folgenden näher beschrieben werden. Alle dabei besonders erwähnten Konstruktionsmerkmale sollen unter Schutz gestellt sein, auch wenn sie nicht in den nachfolgenden Patentansprüchen ausdrücklich erwähnt sind.

Fig. 1 zeigt in Schrägansicht ein Rollbandmaß gemäß der Erfindung, bei welchem das Maßband 1 ein Stück weit aus dem Bandmaßgehäuse 2 ausgezogen ist und aufgrund seiner Querwölbung frei nach oben steht.

In Fig. 2 bis 7 sind sechs verschiedene Querschnittsformen des Maßbandes des erfindungsgemäßen Rollbandmaßes nach Linie II-II in Fig. 1 dargestellt, wobei die Bandquerwölbungen zur Verdeutlichung des Prinzips der Erfindung etwas übertrieben dargestellt sind.

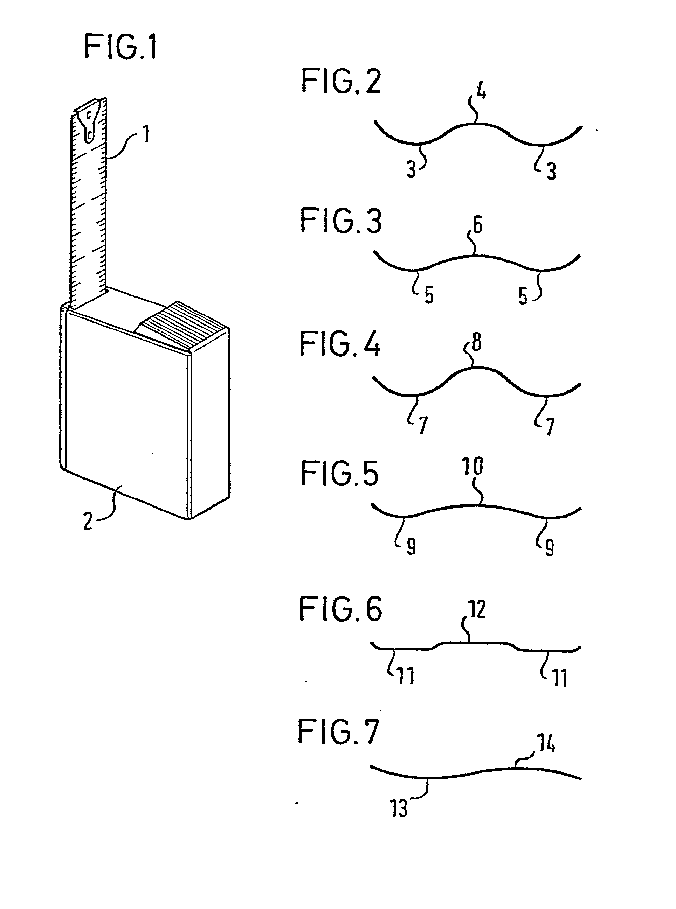

Bei dem in Fig. 2 dargestellten Ausführungsbeispiel besitzt das Maßband 1 zwischen zwei Wölbungen 3, die sich in der Nähe der beiden Bandseitenränder befinden, eine dazwischen befindliche Gegenwölbung 4 in Querschnittsmitte des Bandes, wobei alle drei vorhandenen Wölbungen etwa gleich stark ausgebildet sind.

Bei dem in Fig. 3 dargestellten Ausführungsbeispiel sind ebenfalls zwei seitliche Wölbungen 5 und eine mittlere Gegenwölbung 6 vorgesehen, wobei jedoch die Gegenwölbung 6 breiter und flacher gehalten ist als die beiden seitlichen Randwölbungen 5.

Bei dem in Fig. 4 dargestellten Ausführungsbeispiel sind wiederum zwei Wölbungen 7 in der Nähe der Seitenränder und eine dazwischen befindliche Gegenwölbung 8 in der Querschnittsmitte des Bandes vorgesehen. Die Gegenwölbung 8 ist schmaler gehalten als jede der beiden seitlichen Wölbungen 7.

Bei dem in Fig. 5 dargestellten Ausführungsbeispiel ist die mittlere Gegenwölbung 10 wesentlich breiter gehalten als die beiden sehr schmalen seitlichen Wölbungen 9.

Bei dem in Fig. 6 dargestellten Ausführungsbeispiel sind die Wölbungen eckig ausgebildet, so daß sich bei ausgestrecktem Band ebene Querschnittsbereiche 11, 12 zwischen den Querschnittsecken des Bandes ergeben.

Die vorgenannten, in den Fig. 2 bis 6 dargestellten Ausführungsbeispiele können dahingehend modifiziert werden, daß nur eine Wölbung 3, 5, 7, 9, 11 und eine Gegenwölbung 4, 6, 8, 10, 12 vorgesehen sind oder daß je zwei Wölbungen und Gegenwölbungen vorhanden sind, die im Querschnitt aufeinanderfolgen. In Fig. 7 ist im Querschnitt eine Ausführungsform mit einer flachen Wölbung 13 und einer daneben liegenden flachen Gegenwölbung 14 gezeigt.

Patentansprüche:

1. Rollbandmaß mit einem im Querschnitt gewölbten Maßband, dadurch gekennzeichnet, daß das Maßband neben oder innerhalb der Querwölbung (3, 5, 7, 9, 11, 13) mindestens eine entgegengesetzt gerichtete (gewölbte) Gegenwölbung (4, 6, 8, 10, 12, 14) hat.

2. Rollbandmaß nach Anspruch 1, dadurch gekennzeichnet, daß das Band im Querschnitt wellenförmig gewölbt ist.

3. Rollbandmaß nach Anspruch 1, dadurch gekennzeichnet, daß das Band im Querschnitt zwischen zwei äußeren Wölbungen (3, 5, 7, 9, 11) eine mittlere Gegenwölbung (4, 6, 8, 10, 12) hat.

4. Rollbandmaß nach einem der Ansprüche 1 bis 3, dadurch gekennzeichnet, daß die Wölbung bzw. Wölbungen (5, 7, 9) eine andere Scheitelhöhe haben als die Gegenwölbung bzw. Gegenwölbungen (6, 8, 10).

5. Rollbandmaß nach den Ansprüchen 1 und 3, dadurch gekennzeichnet, daß die Scheitelhöhe der beiden äußeren Wölbungen (5) größer ist als die Scheitelhöhe der dazwischen befindlichen Gegenwölbung (6).

6. Rollbandmaß nach den Ansprüchen 1 und 3, dadurch gekennzeichnet, daß die Scheitelhöhe der beiden äußeren Wölbungen (9) kleiner ist als die Scheitelhöhe der dazwischen befindlichen Gegenwölbung (10).

7. Rollbandmaß nach einem der Ansprüche 1 bis 6, dadurch gekennzeichnet, daß die in einem Sinne gerichtete (gewölbte) Wölbung bzw. Wölbungen breiter sind als die im anderen Sinne gerichtete Gegenwölbung bzw. Gegenwölbungen.

8. Rollbandmaß nach einem der Ansprüche 1 bis 7, dadurch gekennzeichnet, daß die in einem Sinne gerichtete (gewölbte) Wölbung bzw. Wölbungen (9) schmaler sind als die im anderen Sinne gerichtete Gegenwölbung bzw. Gegenwölbungen (10).

9. Rollbandmaß nach einem der Ansprüche 1 bis 8, dadurch gekennzeichnet, daß die in einem Sinne gerichtete Wölbung bzw. Wölbungen (7) flacher ist bzw. sind als die entgegengesetzt gerichtete Gegenwölbung bzw. Gegenwölbungen (8).

10. Rollbandmaß nach einem der Ansprüche 1 bis 9, dadurch gekennzeichnet, daß die in einem Sinne gerichtete Wölbung bzw. Wölbungen (5) steiler ist bzw. sind als die entgegengesetzt gerichtete Gegenwölbung bzw. Gegenwölbungen (6).

11. Rollbandmaß nach einem der Ansprüche 1 bis 10, dadurch gekennzeichnet, daß die Querwölbungen ebene Querschnittsbereiche (11, 12) haben.

FIG.1

1
2

FIG.2

FIG.3

FIG.4

8
7
7

FIG.5

FIG.6

FIG.7

Europäisches Patentamt

# EUROPÄISCHER RECHERCHENBERICHT

0009823

Nummer der Anmeldung

EP 79 103 874.8

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| A | DE - A1 - 2 507 122 (THE STANLEY WORKS)<br>* Anspruch 6 *<br>-- | 1 | G 01 B 3/10 |
| A | DE - U - 1 955 149 (QUENOT & CIE)<br>* Anspruch 1 *<br>-- | 1 | |
| A | US - A - 3 774 309 (LEOPOLDI)<br>* Anspruch 1; Fig. 1 *<br>-- | 1 | |
| A | US - A - 2 050 941 (FARRAND)<br>* Fig. 2, 3 *<br>---- | 1 | |

RECHERCHIERTE SACHGEBIETE (Int. Cl.³)

G 01 B 3/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 20-12-1979 | KOEHN |